# EUROPEAN PATENT APPLICATION

(11) **EP 2 156 733 A1**
(43) Date of publication of application: **24.02.2010**
(21) Application number: 08164161.5
(22) Date of filing: 11.09.2008
(51) Int. Cl.: A01G 3/06

(54) **Garden scissors**

(30) Priority: 22.08.2008 TW 97215222 U
(71) Applicant: Natura Innovation Ltd., Taipei 104 (TW)
(72) Inventor: Shan, Su-Hua, 104, Taipei (TW)
(74) Representative: Lermer, Christoph

(57) **Abstract**

The present invention discloses a garden scissors comprising two handles, two blades, and a fixing device. The two handles include an upper handle and a lower handle. The two blades include a first blade and a second blade. A locking element penetrates the ends of the two blades and fixes them. A connector couples the lower handle and the second blade. The fixing device is arranged in an arched portion of the upper handle and can be rotated to limit the position of the lower handle and make the blades unable to open. Thereby, the fixing device functions as the safety device of the garden scissors of the present invention.

## Description

### BACKGROUND OF THE INVENTION

### Field of the Invention

The present invention relates to a scissors, particularly to a garden scissors, wherein the handles thereof can be positioned fixedly when the blades are closed.

### Description of the Related Art

Scissors are indispensible tools in daily living. There are various types of scissors developed to satisfy different requirements and enable users to work conveniently, such as cutwork scissors, tailor scissors, garden scissors, wire scissors, and surgical scissors with slightly curved tips.

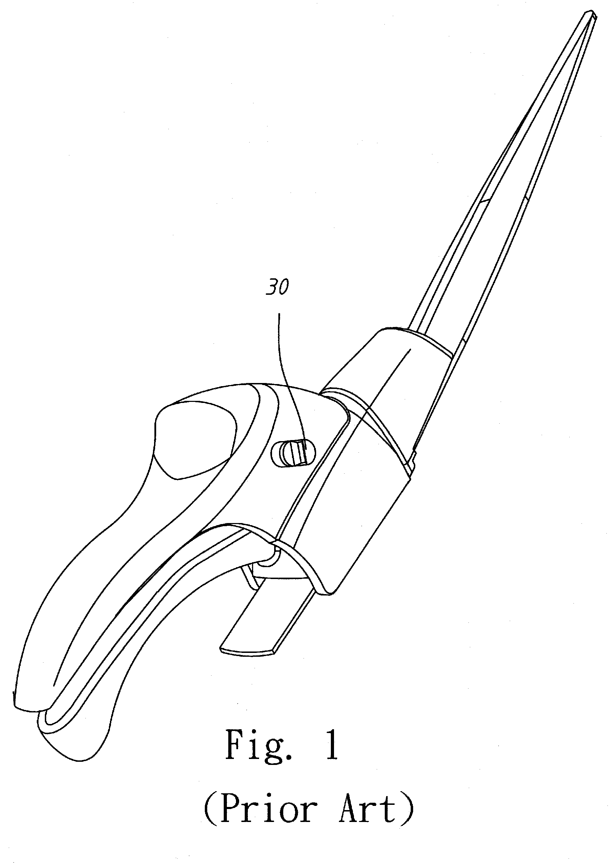

When a user is cutting an object having a special shape, he usually has to turn his wrist to change the angle of the scissors, which makes the user feel not so easy in working. The handles and blades of a garden scissors are usually opened by a spring arranged in between the handles. Sometimes, someone may be cut by the sharpened blade if the user does not pick up the scissors well after work. Therefore, the scissors blades need a method to pick them up. For example, as shown in Fig.1, the scissors has two buttons 30. After the handles and blades have been closed, the user presses one of the two buttons 30 to make the handles and blades unable to open. As the user can achieve the same function via pressing either of the two buttons 30, the design is convenient for left-handers as well as for right-handers. However, such a design is complicated by the consideration of handedness.

Accordingly, the present invention proposes a garden scissors to overcome the abovementioned problems. Below is described the present invention.

### SUMMARY OF THE INVENTION

The primary objective of the present invention is to provide a garden scissors, wherein a fixing device is arranged in the arched portion of the upper handle, and wherein turning the fixing device to a specified point can confine the movement of the lower handle and fix the position of the lower handle.

Another objective of the present invention is to provide a garden scissors, wherein the blades thereof can rotate 360 degrees, whereby a user can perform different-angle cuttings without varying the posture of holding the handles.

To achieve the abovementioned objectives, the present invention proposes a garden scissors comprising two handles including an upper handle and a lower handle; two blades respectively having blade edges and both coupled by a locking element penetrating the rear sides thereof, wherein a connector couples one of the two blades to the lower handle; and a fixing device arranged in an arched portion of the upper handle and used to fix positions of the two handles.

Below, the embodiments are described in detail to make easily understood the objectives, technical contents, characteristics and accomplishments of the present invention.

### BRIEF DESCRIPTION OF THE DRAWINGS

- Fig.1: is a diagram showing a conventional scissors;
- Fig.2: is a perspective view schematically showing a garden scissors according to the present invention;
- Fig.3: is an exploded view schematically showing a garden scissors according to the present invention;
- Fig.4: is a perspective view schematically showing the interior of a garden scissors according to the present invention;
- Fig.5: is a diagram containing a side perspective view and a partial enlarged view schematically showing the interior of a garden scissors according to the present invention; and
- Fig.6: is a sectional view of the surface A-A in Fig.5.

### DETAILED DESCRIPTION OF THE INVENTION

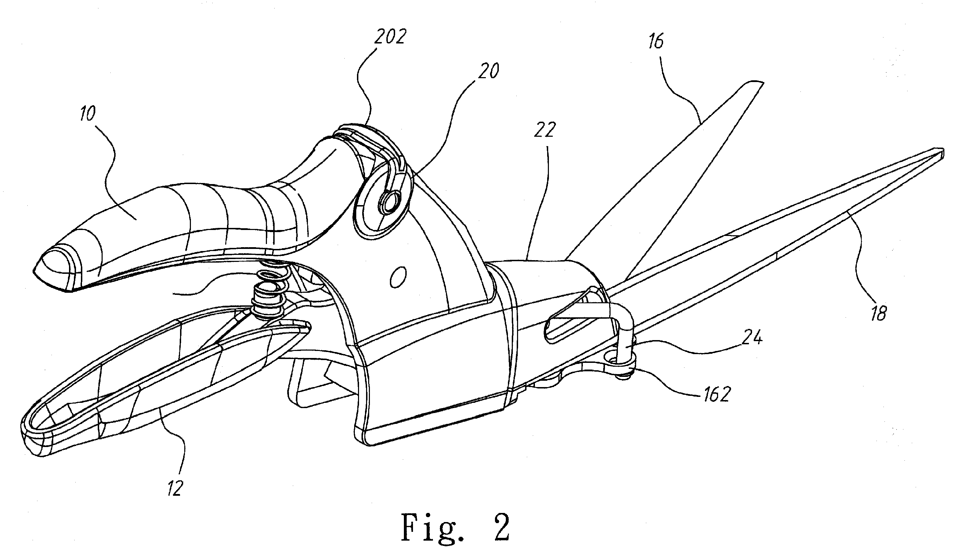

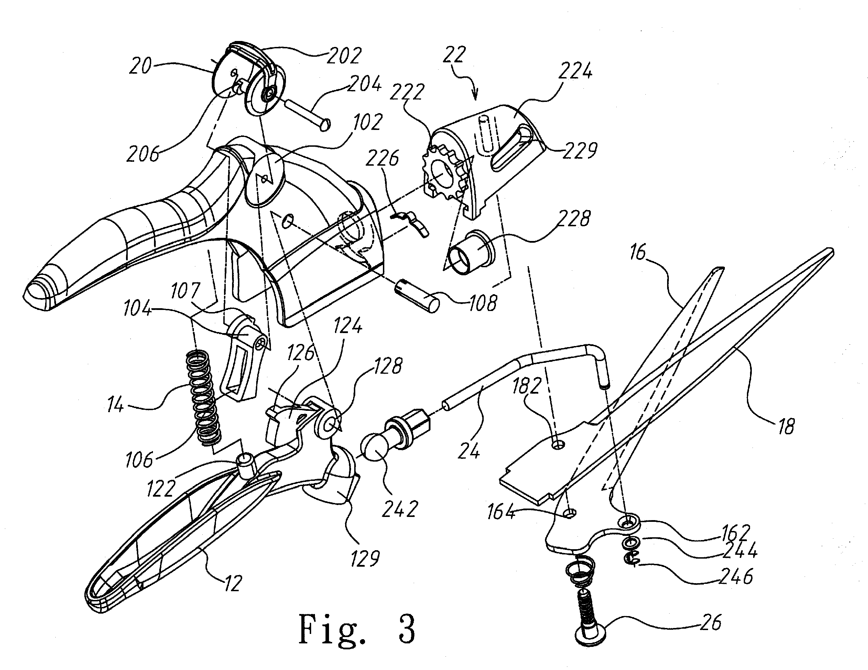

Refer to Fig.2 and Fig.3 respectively a perspective view and an exploded view schematically showing a garden scissors according to the present invention. The garden scissors of the present invention comprises an upper handle 10, a lower handle 12, a first blade 16, a second blade 18 and a fixing device 20. The first blade 16 and the second blade 18 are crossed and respectively have blade edges. A pivotal device 22 is arranged in between the upper and lower handles 10 and 12 and the first and second blades 16 and 18.

The upper handle 10 is bow-shaped. The front end of the upper handle 10 has an accommodating space covering the front end of the lower handle 12. The fixing device 20 is pressed into an arched portion 102 of the upper handle 10. Two lateral sides of the fixing device 20 are two discs and coupled by a switch 202. A first protrusion 206 is arranged inside the discs. A pin 204 passes through the arched portion 102 and the centers of the discs to secure the fixing device 20 to the arched portion 102 of the upper handle 10. The pin 204 also passes through a limiting element 104, and the limiting element 104 has a rectangular slot 106.

A fixing pin 108 passes through the upper handle 10 and a fixing hole 128 of the lower handle 12 to fix the upper handle 10 and the lower handle 12 together. The lower handle 12 has a hole 122 at the middle thereof. An elastic element 14 is installed in the hole 122 of the lower handle 12 and coupled to the upper handle 10. The elastic element 14 opens the upper handle 10 and the lower handle 12 and enables users to apply force uniformly. A hook tenon 124 is arranged on the lower handle 12 and in front of the hole 122; the hook tenon 124 can be inlaid into the rectangular slot 106. The hook tenon 124 has a hook 126. When the lower handle 12 moves upward, the hook 126 will contact and hook the pin 204 to limit the displacement of the lower handle 12. The limiting element 104 also has a second protrusion 107, which can engage with the first protrusion 206.

A connector 24 couples the lower handle 12 to the first blade 16. One side of the connector 24 has a balled end 242 inlaid into a recess 129 at the top of the lower handle 12. The other side of the connector 24 is a rod extending from the balled end 242 and bent 90 degrees. The terminal of the rod has a C-shaped groove. The rear side of the first blade 16 has a protrudent portion having a hole 162. The grooved terminal passes through the hole 162 and a washer 244 and is secured thereto by a circlip 246.

The first blade 16 has a fixing hole 164, and the second blade 18 has a fixing hole 182. A screw 26 passes through the fixing holes 164 and 182, and then the screw 26 is fastened to the pivotal device 22. The pivotal device 22 has a positioning wheel 222, a casing 224, a positioning plate 226 and a connecting pipe 228. The casing 224 covers the rear sides of the first blade 16 and the second blade 18. The casing 224 has a long hole 229. The connector 24 passes through the long hole 229, and then the connector 24 penetrates the hole 162 and is secured thereto. The positioning wheel 222 is a gear-like structure arranged in the exterior of the casing 224 and has a plurality of notches inward from the circumference thereof. The positioning plate 226 can be snapped into one notch of the positioning wheel 222. The connecting pipe 228 is a hollow cylinder penetrating the center of the positioning wheel 222 and the front end of the upper handle 10, whereby the pivotal device 22 is secured to the upper handle 10. The connector 24 passes through the connecting pipe 228.

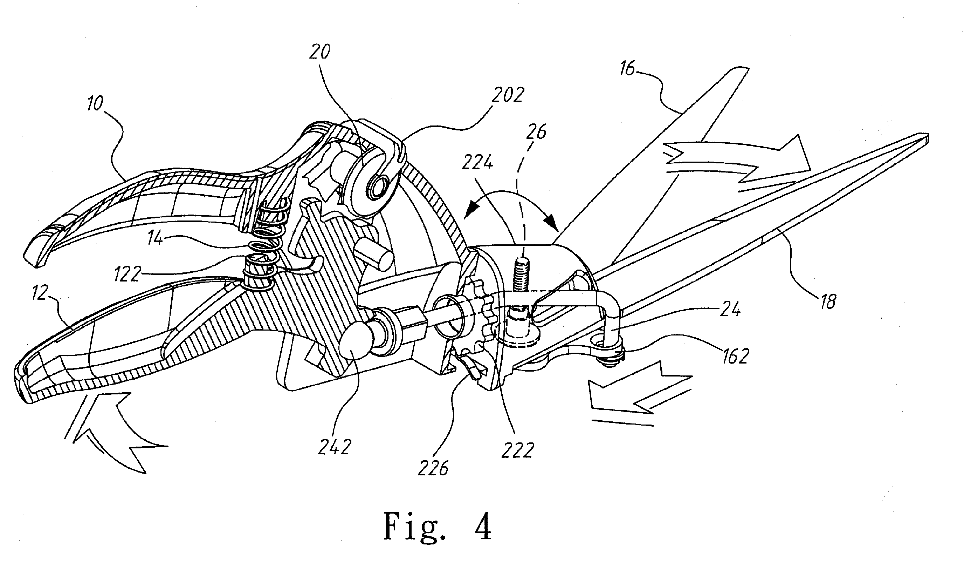

Refer to Fig.4 a perspective view of a garden scissors according to the present invention. As shown in Fig.4, the casing 224 covers the rear sides of the first ands second blades 16 and 18, and the screw 26 passes through the first ands second blades 16 and 18 and then connects with the casing 224. Also seen in Fig.4 is the state that the elastic element 14 is installed in the upper and lower handles 10 and 12. When the lower handle 12 is moved upward, the connector 24 is actuated to move downward to drive the first blade 16 to move rightward. Thus, the garden scissors of the present invention can perform cutting.

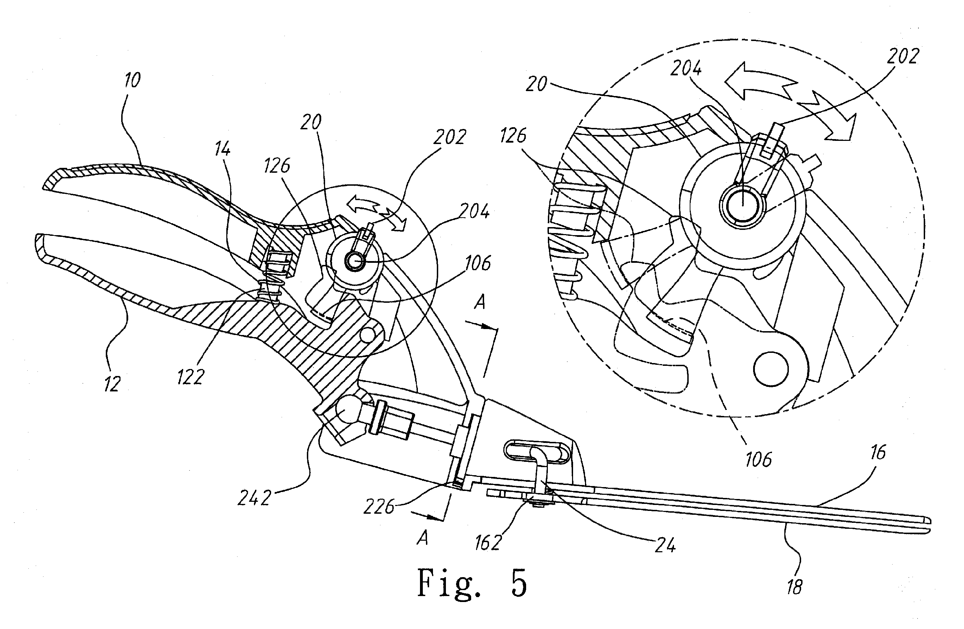

Refer to Fig.5 a side perspective view of a garden scissors according to the present invention. As shown in Fig.5, the switch 202 of the fixing device 20 swings back and forth with the pin 204 being the axis. As shown in the enlarged view, when the switch 202 rotates clockwise, the limiting element 104 rotates counterclockwise by the same degrees to contact the lower side of the upper handle 10. As the hook 126 of the hook tenon 124 is confined to move inside the rectangular slot 106, the lower handle 12 cannot be pulled away from the upper handle 10. Thus, the first blade 16 cannot depart from the second blade 18.

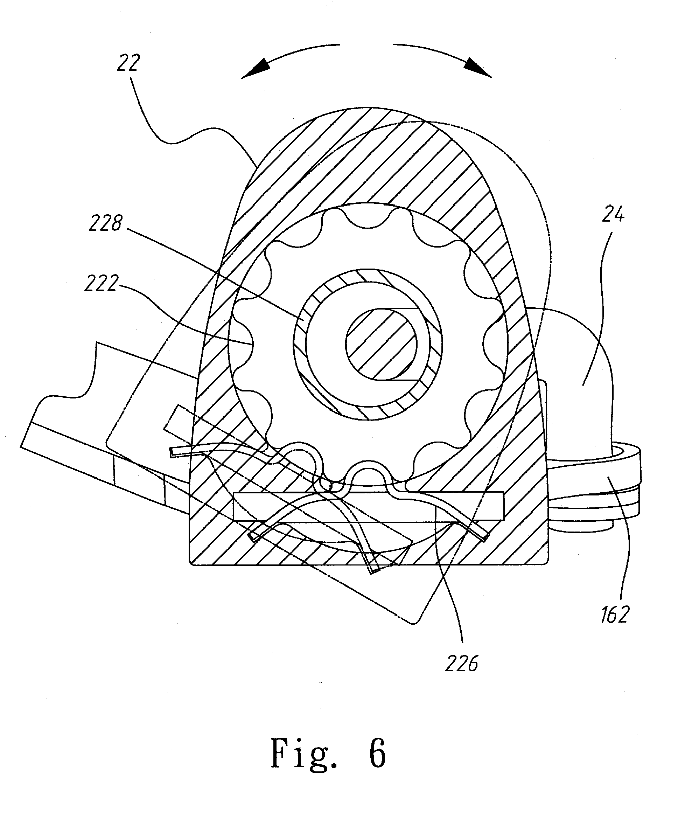

Refer to Fig.6 a sectional view from the surface A-A in Fig.5. In the present invention, the first and second blades 16 and 18 can rotate 360 degrees with the connecting pipe 228 being the axis. The number of the notches of the positioning wheel 222 is equal to the number of the steps of the rotation of the first and second blades 16 and 18. After each step of rotation, the positioning plate 226 is snapped into one of the notches.

In the present invention, a fixing device is arranged in the arched portion of the upper handle, and only pushing the fixing device forward by few angles is enough to make the elastic element unable to stretch out the lower handle. Thereby, the lower handle is positioned fixedly, and two blades of the scissors are thus picked up. No matter what handedness a user has, he can easily pick up the scissors of the present invention via slightly tickling the switch with his thumb.

The embodiments described above are only to exemplify the present invention but not to limit the scope of the present invention. Therefore, any equivalent modification or variation according to the spirit of the present invention is to be also included within the scope of the present invention.

## Claims

1. A garden scissors comprising
two handles including an upper handle and a lower handle;
two blades respectively having blade edges and both coupled by a locking element penetrating rear sides thereof, wherein a connector couples one of said two blades to said lower handle; and
a fixing device arranged in an arched portion of said upper handle and used to fix positions of said two handles.

2. The garden scissors according to claim 1, wherein said two blades include a first blade and a second blade, and said connector couples said first blade and said lower handle; when said lower handle is moved upward, said connector is actuated to drive said first blade to move.

3. The garden scissors according to claim 1 further comprising an elastic element connecting said upper handle and said lower handle.

4. The garden scissors according to claim 1 further comprising a pivotal device arranged in between said two handles and said two blades and enabling said two blades to rotate around an axis parallel to a longitudinal direction of said two handles.

5. The garden scissors according to claim 4, wherein said pivotal device has a positioning wheel and a positioning plate; said positioning wheel has a plurality of notches inward from a circumference thereof, and said positioning plate can be snapped into one of said notches of said positioning wheel.

6. The garden scissors according to claim 1, wherein said lower handle has a hook tenon; said hook tenon can be inlaid into one slot of said upper handle; said hook tenon has a hook used to limit displacement of said hook tenon inside said slot and limit spacing between said upper handle and said lower handle.

7. The garden scissors according to claim 6, wherein a pin passes through said arched portion and said fixing device to secure said fixing device; said pin also passes through said slot.

8. The garden scissors according to claim 1, wherein said fixing device can rotate back and forth on said arched portion.

9. The garden scissors according to claim 1, wherein said connector has a balled end contacting said lower handle.

10. The garden scissors according to claim 5, wherein said pivotal device has a casing covering said rear sides of said two blades; a screw passes through said two blades to secure said two blades to said pivotal device.

11. The garden scissors according to claim 10, wherein said casing has a long hole, and said connector passes through said positioning wheel and said long hole.
